# EUROPÄISCHE PATENTSCHRIFT

(11) **EP 4 368 416 B1**
(45) Veröffentlichungstag und Bekanntmachung des Hinweises auf die Patenterteilung: **06.08.2025**
(21) Anmeldenummer: 23206076.4
(22) Anmeldetag: 26.10.2023
(51) Int. Cl.: B60C 11/13, B60C 11/04, B60C 11/03

(54) **FAHRZEUGREIFEN**
VEHICLE TYRE
BANDAGE PNEUMATIQUE POUR VÉHICULES

(30) Priorität: 08.11.2022 DE 102022211764
(43) Veröffentlichungstag der Anmeldung: 15.05.2024
(73) Patentinhaber: Continental Reifen Deutschland GmbH, 30175 Hannover (DE)
(72) Erfinder: Kristen, Florian, 30165 Hannover (DE); Lutz, André, 30165 Hannover (DE)
(74) Vertreter: Continental Corporation

(56) Entgegenhaltungen:
- EP-A2- 0 227 322
- DE-A1- 102016 211 108
- US-A1- 2010 258 228
- US-A1- 2018 170 117
- US-A1- 2022 118 800

## Beschreibung

Die Erfindung betrifft einen Fahrzeugreifen mit einem Profil, umfassend eine Basisfläche und eine gegenüber der Basisfläche um eine Rillentiefe zurückversetzte Profilrille mit einer ersten Rillenflanke, einer zweiten Rillenflanke und einem sich zwischen den Rillenflanken erstreckenden Rillengrund, wobei sich von einer auf dem Rillengrund gelegenen Grundkontur ausgehend wenigstens ein erster Vorsprung um eine Vorsprungshöhe bis zu einer Abschlussfläche erstreckt, wobei die Vorsprungshöhe kleiner ist als die Rillentiefe, wobei der Vorsprung an die erste Rillenflanke angebunden ist und von der zweiten Rillenflanke beabstandet ist und wobei die Abschlussfläche im Wesentlichen parallel zu der Basisfläche verläuft.

Vorsprünge am Rillengrund eines Fahrzeugreifens können verhindern, dass sich Steine in den Rillen festsetzen, somit die Funktion des Negativvolumens der Rille beeinträchtigen und den Fahrzeugreifen beschädigen. In DE 10 2016 211 108 A1 werden an einem Rillengrund einer Profilrille angeordnete erste und zweite Gummiblöcke beschrieben, wobei die ersten Gummiblöcke an einer ersten Flanke und die zweiten Gummiblöcke an einer zweiten Flanke die Profilrille begrenzender Profilblockbänder angebunden sind. Hierbei ist ein erster Gummiblock jeweils in axialer Richtung bis in eine Position im axialen Erstreckungsbereich von zwei hintereinander angeordneten zweiten Gummiblöcken erstreckt und endet mit Abstand zur zweiten Flanke, wobei ein zweiter Gummiblock jeweils in axialer Richtung bis in eine Position im axialen Erstreckungsbereich von zwei hintereinander angeordneten ersten Gummiblöcken erstreckt ist und mit Abstand zur ersten Flanke endet. US 2010/0258228 A1 beschreibt ein Reifenprofil, umfassend eine Rille mit einem Rillengrund und zwei einander gegenüberliegenden Seitenwänden, wobei ein Auswerfer sich in der Rille von einer der Rillenwände aus erstreckt. US 2022/0118800 A1 beschreibt ein Reifenprofil für einen Schwerlastkraftwagen, umfassend eine Rille mit einer eine einlaufende Kante aufweisenden Wand und einer eine auslaufende Kante umfassenden Wand, wobei eine Mehrzahl an Steinauswerfern entweder an der einen oder der anderen Wand angeordnet sind.

Bei heruntergefahrenem Profil können als Steinauswerfer fungierende, auf dem Rillengrund ausgebildete Vorsprünge in Kontakt mit einem Fahrbahnuntergrund treten. Die aus dem Stand der Technik bekannten Vorsprünge bieten dabei entweder wenig zusätzlichen Grip, insbesondere wenig Vorteile im Nasshandling oder aber es erhöht sich, wenn die Vorsprünge so ausgelegt sind, dass sie kraft einer kantigen Form zusätzlichen Grip erzeugen können, eine Rissanfälligkeit am Rillengrund, ebenfalls aufgrund der kantigen Form.

Der Erfindung liegt die Aufgabe zugrunde, einen Fahrzeugreifen bereitzustellen, der sich bei nach einer Abnutzung des Profils niedriger Profiltiefe durch zusätzlichen Grip und verbessertes Nasshandling auszeichnet, ohne dabei eine Rissanfälligkeit am Rillengrund zu erhöhen.

Die gestellte Aufgabe wird erfindungsgemäß dadurch gelöst, dass die Abschlussfläche einen ersten abschlussflächenseitigen Innenwinkel umfasst, wobei sich der erste abschlussflächenseitige Innenwinkel entlang einer Geodäte zu der Grundkontur hin aufweitet.

Gemäß der Erfindung werden durch einen vergleichsweise spitzen Innenwinkel an der Abschlussfläche zusätzliche Kanten geschaffen, die den mit dem Fahrzeugreifen zu erzielenden Grip und das Nasshandling verbessern können. Auf der anderen Seite werden durch die von der Abschlussfläche kommende Aufweitung des Innenwinkels in Richtung der Grundkontur Spannungsspitzen am Rillengrund verringert, wodurch sich wiederum die Rissanfälligkeit am Rillengrund des Fahrzeugreifens reduziert.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Fahrzeugreifens verlaufen. Die Basisfläche fällt zusammen mit jener glatten Oberfläche, welche der Fahrzeugreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximalen Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Die mit den Merkmalen des Hauptanspruchs erzielten Effekte werden durch bevorzugte Ausführungsformen und Ausgestaltungen unterstützt und weiter verstärkt.

Die Profilrille in dem Profil des Fahrzeugreifens kann einen typischen Aufbau haben. Die Profilrille kann eine Umfangsrille, eine Schrägrille, eine Querrille oder eine komplexe Rille sein, wobei eine komplexe Rille beispielsweise in einem Verbindungsabschnitt zwischen zwei oder mehr Rillen vorliegen kann. Insbesondere können die Rillenflanken senkrecht zu der Basisfläche oder beispielsweise in einem Winkel zwischen 70° und 90° zu der Basisfläche verlaufen. Der Rillengrund kann im Wesentlichen flach sein oder im Querschnitt beispielweise eine U-förmige Wölbung aufweisen. Die Rillentiefe wird senkrecht zu der sich imaginär über der Profilrille erstreckenden Basisfläche zwischen der Basisfläche und einem tiefsten Punkt am Rillengrund der Profilrille gemessen. Bei einem über die Rillenerstreckung gleichbleibenden Rillenquerschnitt kann die Rillentiefe an einem beliebigen Punkt entlang der Rillenerstreckung gemessen werden. Bei einer entlang der Rillenerstreckung veränderlichen Rillentiefe wird die Rillentiefe in einem Rillenquerschnitt im Bereich des ersten Vorsprungs gemessen, wobei der tiefste Punkt am Rillengrund in dem Rillenquerschnitt unter oder in Querschnittsrichtung neben dem ersten Vorsprung liegen kann. Die Vorsprungshöhe wird senkrecht zu der Basisfläche zwischen der Abschlussfläche und einem unter dem Vorsprung gelegenen tiefsten Punkt am Rillengrund der Profilrille gemessen.

Ein Vorsprung ist an eine Rillenflanke angebunden, wenn wenigstens entlang einer Teilerstreckung der Vorsprungshöhe eine physische, nicht reversibel lösbare Verbindung zwischen dem Vorsprung und der Rillenflanke besteht. Mit anderen Worten geht der Vorsprung entlang der Teilerstreckung der Vorsprungshöhe nahtlos in einen von der Rillenflanke begrenzten Profilblock bzw. ein Profilband über. Die Teilerstreckung kann wenigstens 50% und vorzugsweise wenigstens 75% der Vorsprungshöhe betragen. In einer bevorzugten Ausführungsform ist die Anbindung auf einer vollständigen Erstreckung zwischen der Abschlussfläche und dem Rillengrund ohne Unterbrechung ausgebildet. In diesem Fall umfasst ein Übergang des Vorsprungs zur ersten Rillenflanke drei Übergangsbereiche, nämlich einen Übergangsbereich zwischen der Abschlussfläche und der ersten Rillenflanke und jeweils einen Übergangsbereich zu beiden Seiten der Abschlussfläche, zwischen den Flanken des Vorsprungs und der ersten Rillenflanke.

Die Abschlussfläche kann konzentrisch zu der Basisfläche verlaufen, wenn die Basisfläche im Bereich des Vorsprungs gekrümmt verläuft, wie beispielsweise im Bereich der Reifenschulter aber auch im Rahmen einer Umfangskrümmung. Die Abschlussfläche kann eben sein und eine zu einer gekrümmten Basisfläche konzentrische Krümmung approximieren. In beiden genannten Fällen verläuft die Abschlussfläche im Wesentlichen parallel zu der Basisfläche.

Eine Geodäte zwischen dem ersten abschlussflächenseitigen Innenwinkel und der Grundkontur des Vorsprungs ist die kürzeste auf einer Oberfläche des Vorsprungs verlaufende Verbindung zwischen dem Berührungspunkt zweier Seiten der Abschlussfläche in dem ersten abschlussseitigen Innenwinkel und der Grundkontur.

Ein Aufweiten des Innenwinkels entlang der Geodäte kann beispielsweise anhand von Schnitten durch den Vorsprung in im Wesentlichen parallel zu der Basisfläche verlaufenden Schnittebenen an verschiedenen Positionen entlang der Höhestreckung des Vorsprungs gemessen werden. Ein Aufweiten des ersten abschlussflächenseitigen Innenwinkels kann gegeben sein, wenn ein an einem Schnittpunkt mit der Geodäte gemessener Innenwinkel in einer Schnittebene größer ist als der erste abschlussflächenseitige Innenwinkel in der Abschlussfläche. Weitere Merkmale eines sich aufweitenden abschlussflächenseitigen Innenwinkels können sein, dass ein Innenwinkel an einem Schnittpunkt mit der Geodäte in einer radial weiter außen gelegenen Schnittebene größer ist als in einer radial weiter innen gelegenen Schnittebene. In einer Ausführungsform der Erfindung wächst der Innenwinkel als Funktion einer Pfadlänge entlang der Geodäte von der Abschlussfläche in Richtung der Grundkontur monoton, vorzugsweise stetig und ist weiter vorzugsweise im Rahmen der genannten Funktion stetig differenzierbar.

Unter Winkeln, Kanten und Ecken sind keine mathematisch exakten Konstrukte zu verstehen, sondern die im Rahmen einer üblichen Fertigungsgenauigkeit eines Fahrzeugreifens zu erreichenden entsprechenden Profilmerkmale. Beispielsweise kann ein Übergang zwischen zwei Flächen unterschiedlicher Orientierung mit einem Verrundungsradius von 1 mm noch als Kante und der Übergang noch als gewinkelt angesehen werden.

Besonders bevorzugt ist eine Ausführung, gemäß der ein Flächeninhalt der Abschlussfläche wenigstens 30%, vorzugsweise wenigstens 50%, weiter vorzugsweise wenigstens 70% eines von der Grundkontur eingeschlossenen Flächeninhalts beträgt. Die Grundkontur ist zu der ersten Rillenflanke hin durch eine Trennlinie zwischen der ersten Rillenflanke und dem Rillengrund definiert. Bei einem flachen Rillengrund ist die Trennlinie an einer Kante zwischen Rillengrund und Rillenflanke definiert und die von der Grundkontur eigeschlossene Fläche liegt in einer Ebene. Bei einem im Querschnitt U-förmigen Rillengrund kann die Trennlinie dort verlaufen, wo ein geradliniger Verlauf der Rillenflanken in den gekrümmten Verlauf der U-Form des Rillengrundes übergeht. In diesem Fall liegt die von der Grundkontur eigeschlossene Fläche nicht in einer Ebene und es sollte zur Approximation eines zugehörigen Flächeninhalts im Sinne der obigen Angaben eine Projektion der Grundkontur auf eine zu der Basisfläche im Wesentlichen parallele Ebene herangezogen werden. Durch eine solchermaßen ausreichend große Abschlussfläche kann bei abgefahrenem Profil eine entsprechend große Kontaktfläche des Vorsprungs zu einem Fahrbahnuntergrund bereitgestellt werden. Weiterhin kann für einen von der Grundkontur zu der Abschlussfläche hin nicht zu stark verjüngenden Vorsprung leichter eine durchgehende strukturelle Integrität gewährleistet werden, die geeignet ist, Kräfte aus einem Kontakt mit dem Fahrbahnuntergrund aufzunehmen.

Die Vorsprungshöhe kann zwischen 5% und 50%, vorzugsweise zwischen 10% und 30% der Profiltiefe betragen. Die Vorsprungshöhe kann dementsprechend in einem typischen Profil beispielsweise zwischen 3 mm bis 5 mm betragen.

Hierdurch wird eine gute Funktion des Profils unter verschiedenen Abnutzungsgraden des Fahrzeugreifens erreicht.

Die Grundkontur des ersten Vorsprungs kann sich über 20% bis 80%, vorzugsweise über 40% bis 70% einer Breite des Rillengrundes erstrecken. Bei einem flachen Rillengrund ist die Breite des Rillengrundes als kürzeste Erststreckung auf dem flachen Rillengrund zwischen zwei gegenüber dem Rillengrund abgewinkelten Rillenflanken definiert. Bei einem im Querschnitt U-förmigen Rillengrund kann die Breite des Rillengrundes als kürzeste Entfernung zwischen zwei angrenzenden Rillenflanken gemessen werden, wo ein geradliniger Verlauf der Rillenflanken in den gekrümmten Verlauf der U-Form des Rillengrundes übergeht. Durch die beschriebene Wahl der Breite des ersten Vorsprungs am Rillengrund kann ein guter Kompromiss zwischen der Funktion der Profilrille beim Ausleiten von Wasser auf der einen Seite und der Funktion des Vorsprungs als Steinauswerfer und Mittel zur Verbesserung des Grips bei heruntergefahrenem Profil auf der anderen Seite gefunden werden.

Der Übergang des Vorsprungs zum Rillengrund kann mit einem geeigneten Radius verrundet sein, um die Rissanfälligkeit zu verringern. Hierzu kann ein Verrundungsradius von 1 mm bis 3 mm vorteilhaft sein. Die Grundkontur des Vorsprungs ist dann definiert als imaginäre Kontur des Vorsprungs am Rillengrund in gedachter Abwesenheit der Verrundung. Auch die an den Flanken des ersten Vorsprungs und/oder an der Abschlussfläche gelegenen Übergangsbereiche des Vorsprungs zur ersten Rillenflanke können auf ähnliche Weise verrundet sein.

Vorzugsweise ist der erste abschlussflächenseitige Innenwinkel kleiner oder gleich 120°. Auf diese Weise kann an der Abschlussfläche eine ausreichend große Kantenlänge untergebracht werden, um den Grip und die Nasseigenschaften des Fahrzeugreifens bei heruntergefahrenem Profil möglichst gut zu fördern.

Die Abschlussfläche - und/oder eine Kontur des Vorsprungs in einer im Wesentlichen parallel zu der Basisfläche verlaufenden Schnittebene entlang der Erstreckung des Vorsprungshöhe - kann leicht gekrümmte Seiten aufweisen, wie beispielsweise aus einem Bogenpolygon bekannt. Der Innenwinkel bestimmt sich dann anhand zweier Tangenten unmittelbar vor dem Berührungspunkt zweier gekrümmter, den Innenwinkel einschließender Seiten. Vorzugsweise ist die Abschlussfläche polygonförmig, also von geraden Strecken begrenzt, wobei eine der Seiten des Polygons auf der ersten Rillenflanke verlaufen kann. Beispielsweise kann die Abschlussfläche die Form eines Dreiecks oder die Form eines Vierecks annehmen. Hierbei können die Innenwinkel der Abschlussfläche einander, wie im Falle eines gleichseitigen Dreiecks oder Quadrats gleichen oder wie im Falle eines gleichschenkligen Dreiecks oder Trapezes teilweise gleichen.

Wenn die Abschlussfläche mehrere abschlussflächenseitige Innenwinkel umfasst, kann sich eine Teilmenge oder jeder der abschlussflächenseitigen Innenwinkel entlang jeweils einer Geodäte zu jeweils einem Punkt auf der Grundkontur hin aufweiten. Hierdurch wird der positive Effekt der Aufweitung des ersten abschlussflächenseitigen Innenwinkels vervielfacht. Die weiteren abschlussflächenseitigen Innenwinkel neben dem ersten abschlussflächenseitigen Innenwinkel können einigen oder allen Bedingungen an den ersten abschlussflächenseitigen Innenwinkel und dessen Aufweitung genügen, wie sie vor- und/oder nachstehend beschrieben werden. Die Innenwinkel innerhalb eines Vorsprungs können sich vorzugsweise in identischer Weise aufweiten. Vorzugsweise weitet sich wenigstens ein abschlussflächenseitiger Innenwinkel in erfindungsgemäßer Weise von einem solchen Punkt auf der Abschlussfläche ausgehend auf, der nicht zu der ersten Rillenflanke benachbart ist. Mit anderen Worten sollte wenigstens der erste abschlussflächenseitige Innenwinkel an keinem seiner Schenkel von der ersten Rillenflanke definiert werden. Durch einen frei von der Rillenflanke stehenden abschlussflächenseitigen Innenwinkel und dessen erfindungsgemäßes Aufweiten entfaltet die Erfindung ihre volle Wirkung, insbesondere in Bezug auf einen verbesserten Grip bei heruntergefahrenem Profil.

Der erste abschlussflächenseitige Innenwinkel kann sich entlang der Geodäte zu der Grundkontur hin um wenigstens 30%, vorzugsweise um wenigstens 50% aufweiten. Hierdurch wird ein gewisses Grundniveau des erwünschten Effekts erreicht.

Die Grundkontur kann abseits der ersten Rillenflanke eine gerundete Form ohne Innenwinkel aufweisen. Abschnitte abseits der ersten Rillenflanke zeichnen sich hierbei dadurch aus, dass ein etwaiger Innenwinkel im Übergangsbereich zwischen dem Vorsprung und der ersten Rillenflanke nicht mitgezählt wird, die Grundkontur also abseits der ersten Rillenflanke auch dann eine gerundete Form ohne Innenwinkel aufweisen kann, wenn ein Innenwinkel in einem kantig ausgeführten Übergangsbereich zu der ersten Rillenflanke vorliegt. Die Grundkontur ist abseits der ersten Rillenflanke vorzugsweise durch einen ovalen Bogen, insbesondere durch einen elliptischen Bogen, insbesondere durch einen Kreisbogen zu beschreiben. Wenn die Grundkontur keinen Innenwinkel aufweist, kann ein Ersatzwinkel von 180° definiert werden, zu dem hin sich der erste abschlussseitige Innenwinkel aufweiten kann. Im Falle eines ovalen Bogens, eines elliptischen Bogens oder eines Kreisbogens kann eine Tangente an dem Punkt auf der Grundkontur, an dem die Geodäte mündet, als Flankenpaar eines zu 180° um den Mündungspunkt der Geodäte auf der Grundkontur herum geöffneten Innenwinkels angesehen werden.

Die Geodäte zwischen dem ersten abschlussflächenseitigen Innenwinkel und der Grundkontur kann senkrecht zu der Basisfläche verlaufen. Ein senkrechter Verlauf einer Geodäte zwischen einem abschlussflächenseitigen Innenwinkel und einer Grundkontur kann beispielsweise auf Grundlage einer abseits der ersten Rillenflanke oval geformten Grundkontur erreicht werden, wobei ein abseits der ersten Rillenflanke gelegener Punkt auf der Grundkontur in Richtung der Basisfläche um die Vorsprungshöhe verschoben wird und mit zwei auf der ersten Rillenflanke gelegenen Punkten zu einem die Abschlussfläche definierenden Dreieck verbunden wird. Alternativ kann die Geodäte zwischen dem ersten abschlussflächenseitigen Innenwinkel und der Grundkontur zu einer Senkrechten auf der Basisfläche um einen Winkel von maximal 15° angeschrägt verlaufen, also nahe einem senkrechten Verlauf ausgerichtet sein. Durch einen möglichst steilen Verlauf der Flanken des Vorsprungs kann eine möglichst große Abschlussfläche erreicht werden. Auf der anderen Seite sollten die Flanken des Vorsprungs keineswegs einen Überhang aufweisen, sollten also mit keiner der Richtungskomponenten ihrer Normalenvektoren von der Basisfläche fortweisen, um die Funktionalität des Vorsprungs als Steinauswerfer zu bewahren.

In einer bevorzugten Ausführungsform weist der erste Vorsprung bei der Anbindung zu der ersten Rillenflanke entlang der gesamten Erstreckung der Vorsprungshöhe seine jeweils größte Breite auf. Mit anderen Worten kann eine Kontur des Vorsprungs in einer beliebigen im Wesentlichen zu der Basisfläche parallelen Schnittebene so geformt sein, dass ein Abstand zwischen den zwei Übergangsbereichen des Vorsprungs in die ersten Rillenflanke der größte Abstand zweier Punkte innerhalb der Kontur ist. Hierdurch kann die Anbindung des Vorsprungs an die erste Rillenflanke besonders stabil gestaltet werden.

In einer weiteren bevorzugten Ausführungsform betragen Winkel zwischen der ersten Rillenflanke und dem ersten Vorsprung wenigstens 90°. Die Winkel werden als Außenwinkel an der ersten Rillenflanke und dem ersten Vorsprung in Ebenen gemessen, die im Wesentlichen parallel zu der Basisfläche verlaufen. Die Größenangabe bezieht sich auf Winkel zwischen den Flanken des Vorsprungs und der ersten Rillenflanke in zu beiden Seiten des Vorsprungs gelegenen Übergangsbereichen, wobei die Winkel an beliebigen Positionen innerhalb der Vorsprungshöhe gemessen werden können. Vorzugsweise werden die Winkel von der Grundkontur zu der Abschlussfläche hin größer. Indem die Winkel keinesfalls kleiner als 90° ausgeführt werden, können enge Nischen zwischen der ersten Rillenflanke und dem ersten Vorsprung vermieden werden, in denen sich Steine aber auch Wasserreservoirs sammeln könnten. Indem eine Verkleinerung der Winkel in Richtung der Abschlussfläche ausgeschlossen wird, können entsprechende Nischen zwischen dem Rillengrund und dem Vorsprung vermieden werden. Indem vielmehr eine Vergrößerung der Winkel in Richtung der Abschlussfläche vorgesehen wird, können dem Steinauswurf besonders zuträgliche Oberflächen geschaffen werden.

Die Abschlussfläche kann von wenigstens einem Einschnitt in den Vorsprung unterbrochen werden. Der Einschnitt kann eine Tiefe zwischen 0,25 mm und 2,5 mm, vorzugsweise zwischen 0,5 mm und 2 mm aufweisen. Ein Einschnitt kann sich von einem äußeren Rand der Abschlussfläche bis zu einem Übergangsbereich zwischen der Abschlussfläche und der ersten Rillenflanke erstrecken. Durch Einschnitte in dem Vorsprung können zusätzliche Kanten geschaffen werden, die bei abgefahrenem Profil mit einem Fahrbahnuntergrund in Kontakt treten können und zusätzlichen Grip sowie verbessertes Nasshandling bewirken können.

Der Fahrzeugreifen kann ein Negativvolumen von höchstens 25% aufweisen. Die Prozentangabe errechnet sich über den Quotienten aus dem Gesamtnegativvolumen und dem Gesamtvolumen zwischen der Basisfläche und einer Grundfläche. Die Grundfläche hat entlang der Umfangsrichtung einen gleichbleibenden Verlauf. In axialen Bereichen zwischen zwei Umfangsrillen verläuft die Grundfläche auf dem Niveau des Rillengrundes der Umfangsrillen. In Bereichen zwischen einer Umfangsrille und einer Reifenschulter verläuft die Grundfläche je Punkt entlang der Querrichtung auf dem Niveau des Rillengrundes einer in Umfangsrichtung gemessen tiefsten Quer- oder Schrägrille. Die erfindungsgemäßen Vorsprünge entfalten ihre Wirkung als Steinauswerfer sowie als Mittel zur Erhöhung des Grips und Nasshandlings bei heruntergefahrenem Profil in besonderem Maße in Fahrzeugreifen mit geringem Negativvolumen, insbesondere im Zusammenhang mit rollwiderstandsoptimierten Profilen, wie sie beispielsweise bei Personenkraftfahrzeugen und bei Lastkraftfahrzeugen für den Langstrecken-Gütertransport zum Einsatz kommen. Durch die Anbindung des Vorsprungs an die erste Rillenflanke und den Abstand zu der zweiten Rillenflanke kann auch bei schmalen Profilrillen eine wasserabführende Funktion bestmöglich erhalten werden. Weiterhin kann der Vorsprung durch eine, kraft seiner Anbindung an eine Rillenflanke verliehene, zusätzliche Stabilität im Vergleich zu einem freistehenden Steinauswerfer schmal ausgeführt werden, wodurch ebenfalls Raum für die wasserabführende Funktion der Profilrille geschaffen wird.

In einer bevorzugten Ausführungsform umfasst der Fahrzeugreifen mehrere Vorsprünge, die im Wesentlichen den Bedingungen an den ersten Vorsprung gemäß vor- und/oder nachstehender Beschreibung genügen können. Es kann wenigstens ein zweiter Vorsprung den Bedingungen an den ersten Vorsprung im Wesentlichen genügen, mit der einzigen Ausnahme, dass der zweite Vorsprung an die zweite statt an die erste Rillenflanke angebunden ist und von der ersten statt von der zweiten Rillenflanke beabstandet ist. Hierbei kann der zweite Vorsprung dem ersten Vorsprung in einem Mindestumfang des Hauptanspruchs gleichen - mit der genannten Ausnahme in Bezug auf das Verhältnis zu der ersten und zweiten Rillenflanke - oder zusätzlich wahlweise im Umfang einer beliebigen Menge an weiteren Merkmalen. Alternativ oder zusätzlich kann wenigstens ein weiterer Vorsprung den Bedingungen an den ersten Vorsprung vollständig genügen. Hierbei kann der weitere Vorsprung zu dem ersten Vorsprung identisch sein und an einer anderen Position entlang der Profilrille an die erste Rillenflanke angebunden sein oder dem ersten Vorsprung nur im Umfang des Hauptanspruchs, und zusätzlich wahlweise im Umfang einer Untermenge an weiteren Merkmalen gleichen.

In einer Ausführungsform sind wenigstens drei entlang einer Längserstreckung der Profilrille zueinander benachbart angeordnete Vorsprünge abwechselnd nach der Art des ersten Vorsprungs und des zweiten Vorsprungs gegenüber der ersten Rillenflanke und der zweiten Rillenflanke angeordnet. Mit anderen Worten können entlang der Profilrille abwechselnd jeweils ein die Mindestmerkmale des Hauptanspruchs erfüllender Vorsprung an die erste Rillenflanke und ein zweiter Vorsprung an die zweite Rillenflanke angebunden sein, wobei auch der zweite Vorsprung - mit der genannten Ausnahme in Bezug auf das Verhältnis zu der ersten und zweiten Rillenflanke - die Mindestmerkmale des Hauptanspruchs erfüllt. Vorzugsweise sind die Vorsprünge in einer Profilrille, abgesehen von der spiegelverkehrten Orientierung jedes zweiten Vorsprungs, identisch zueinander. Die Abstände entlang der Längserstreckung der Profilrille zwischen den Vorsprüngen sind vorzugsweise konstant und können jeweils zwischen einer Hälfte und einem Vierfachen, vorzugsweise ungefähr das Eineinhalbfache einer in der gleichen Richtung gemessenen maximalen Breite eines jeweiligen Vorsprungs betragen, wobei ein Abstand jeweils als kürzester Abstand zwischen den Flanken zweier Vorsprünge gemessen wird. Auf diese Weise kann am Rillengrund ein alternierendes Muster an die erste und zweite Rillenflanke angebundener Vorsprünge erzeugt werden, welches einer möglichst isotropen Steinauswurfsfunktion und Stabilität der Profilrille zuträglich ist und zudem ein vorteilhaftes Strömungsverhalten durch die Profilrille begünstigen kann.

Der Fahrzeugreifen kann mehrere Profilrillen umfassen und es können Vorsprünge nach den Bedingungen der vor- und/oder nachstehenden Beschreibung in jeder oder in einer Untermenge der Profilrillen ausgebildet sein.

Die Erfindung wird nachfolgend unter Bezugnahme auf die beigefügten Zeichnungen anhand vorteilhafter Ausführungsformen beispielhaft beschrieben. Es zeigen:
Figur 1 verschiedene Ansichten einer Profilrille, jeweils mit Vorsprüngen gemäß verschiedenen Ausführungsformen der Erfindung,
Figur 2a eine seitliche Ansicht eines Vorsprungs gemäß einer ersten Ausführungsform der Erfindung,
Figur 2b eine perspektivische Ansicht eines Vorsprungs gemäß einer ersten Ausführungsform der Erfindung,
Figur 2c eine Draufsicht auf einen Vorsprung gemäß einer ersten Ausführungsform der Erfindung,
Figur 2d eine Schnittansicht entlang der in Figur 2a angedeuteten Schnittebene IId,
Figur 3 eine Draufsicht auf ein Profil mit Vorsprüngen gemäß einer alternativen Ausführungsform der Erfindung.

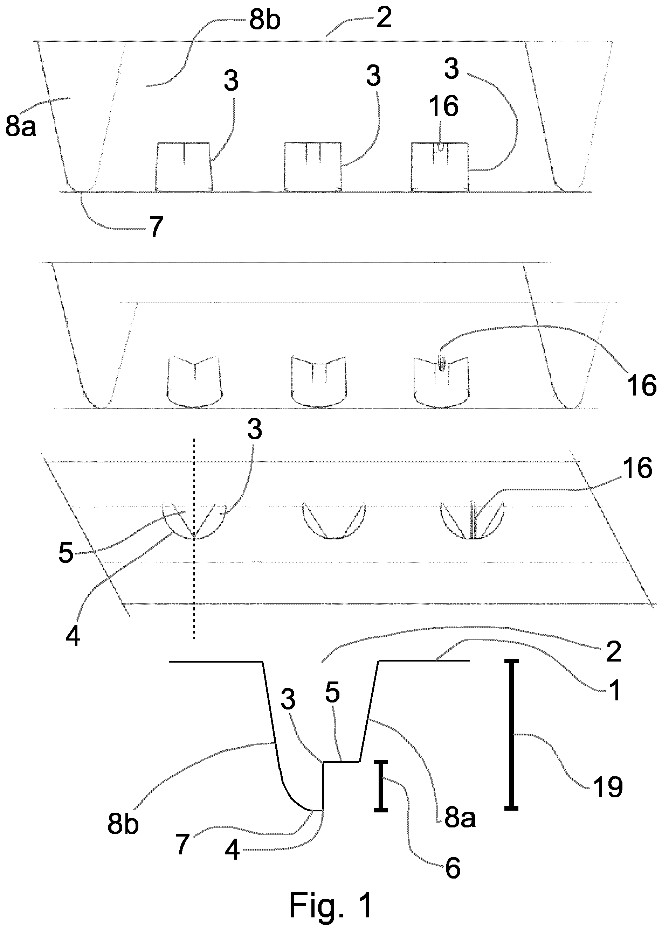

Figur 1 zeigt in vier Zeilen unterschiedliche Ansichten auf dieselbe Profilrille 2 mit darin angeordneten erfindungsgemäßen Vorsprüngen 3 gemäß drei verschiedenen Ausführungsformen. In den oberen drei Zeilen der Figur 1 verläuft die Längserstreckungsrichtung der Profilrille 2 in der Zeichnungsebene von links nach rechts; in der unteren Zeile der Figur 1 steht die Längserstreckungsrichtung der Profilrille 2 senkrecht auf der Zeichnungsebene. Die oberste Zeile aus Figur 1 zeigt die Profilrille 2 aus einem parallel zu einer Basisfläche 1 kommenden Blickwinkel. Die zweite Zeile von oben der Figur 1 zeigt die Profilrille 2 aus einer perspektivischen Ansicht von schräg oben. Die zweite Zeile von unten der Figur 1 zeigt die Profilrille 2 in Draufsicht. Die unterste Zeile aus Figur 1 zeigt einen Schnitt entlang der gestrichelten Linie aus der Darstellung in der zweiten Zeile von unten der Figur 1, wobei der Schnitt durch die Profilrille 2 und durch einen der Vorsprünge 3 verläuft.

Die Profilrille 2 ist durch eine erste Rillenflanke 8a und eine zweite Rillenflanke 8b begrenzt, zwischen denen sich ein im Querschnitt U-förmiger Rillengrund 7 erstreckt. In der Draufsicht aus der zweiten Zeile von unten in Figur 1 sind Trennlinien zwischen dem Rillengrund 7 und den Rillenflanken 8a, 8b durch blasse Linien dort angedeutet, wo ein geradliniger Verlauf der Rillenflanken in den gekrümmten Verlauf der U-Form des Rillengrundes übergeht. Auf dem Rillengrund 7 sind Vorsprünge 3 mit jeweils einer abseits der ersten Rillenflanke 8a im Wesentlichen kreisförmigen Grundkontur 4 ausgebildet; der Verlauf der Grundkonturen 4 auf dem U-förmigen Rillengrund 7 ist in den Figuren nur schematisch dargestellt und kann im Rahmen üblicher fachlicher Überlegungen in eine dreidimensionale, in zwei Richtungen gekrümmte Form gebracht werden. Überall dort, wo die Vorsprünge 3 auf einer Höhe mit der ersten Rillenflanke 8a verlaufen, sind die Vorsprünge 3 an die erste Rillenflanke 8a angebunden. Dies ist in den mittleren beiden Zeilen der Figur 1 durch ein Verblassen der Zeichnungslinien in den Übergangsbereichen zwischen den Vorsprüngen 3 und der ersten Rillenflanke 8a angedeutet. In der untersten Zeile der Figur 1 ist deutlich dargestellt, wie der Vorsprung 3 entlang einer vollständigen Erstreckung seiner Vorsprungshöhe 6 mit dem U-förmigen Rillengrund und mit der ersten Rillenflanke 8a verbunden ist. Die Grundkonturen 4 der Vorsprünge 3 erstrecken sich jeweils über eine Breite von etwas über 50% der Rillenbreite, sodass zu einer der zweiten Rillenflanke 8b zugewandten Seite der Vorsprünge 3 noch Freiräume am Rillengrund 7 verbleiben, in denen Wasser durch die Profilrille 2 abgeführt werden kann. Durch die abseits der ersten Rillenflanke 8a im Wesentlichen halbkreisförmige Grundkontur 4 werden Spannungsspitzen am Übergang zwischen dem Vorsprung 3 und dem Rillengrund 7 begrenzt, wodurch eine Rissanfälligkeit klein gehalten werden kann.

Die Vorsprünge 3 erheben sich jeweils um eine Vorsprungshöhe 6 radial nach außen, bis zu jeweils einer gewinkelten Abschlussfläche 5. Die sich zwischen der Grundkontur 4 an dem Rillengrund 7 und der Abschlussfläche 5 erstreckende Vorsprungshöhe 6 liegt bei etwa 30% der zwischen dem Rillengrund 7 und der Basisfläche 1 gemessenen Rillentiefe 19. Die in Figur 1 gezeigte Profilrille 2, insbesondere gemäß der untersten Zeile der Figur 1, entspricht einem unbenutzten Zustand des Fahrzeugreifens mit einem noch nicht heruntergefahrenen Profil. Nachdem das Profil an der Basisfläche 1 zu beiden Seiten der Profilrille 2 zunehmend abgefahren wird, kann ab einem bestimmten Punkt der Vorsprung 3 in Kontakt mit einem Fahrbahnuntergrund treten. Hierbei können die scharfen Kanten des Vorsprungs 3 an dessen Abschlussfläche 5 für zusätzlichen Grip und gute Nasseigenschaften des Fahrzeugreifens sorgen. Die in Figur 1 gezeigten Abschlussflächen 5 sind dreieckig (in der Figur links dargestellt) bzw. trapezförmig (in der Figur mittig und rechts dargestellt), wobei jeweils eine Grundseite des Dreiecks bzw. der Trapeze auf der ersten Rillenflanke 8a verläuft. Bei der in Figur 1 rechts dargestellten Ausführungsform ist ein Einschnitt 16 in der Abschlussfläche 5 ausgebildet, der für zusätzlichen Grip und eine Verbesserung der Nasseigenschaften sorgen kann.

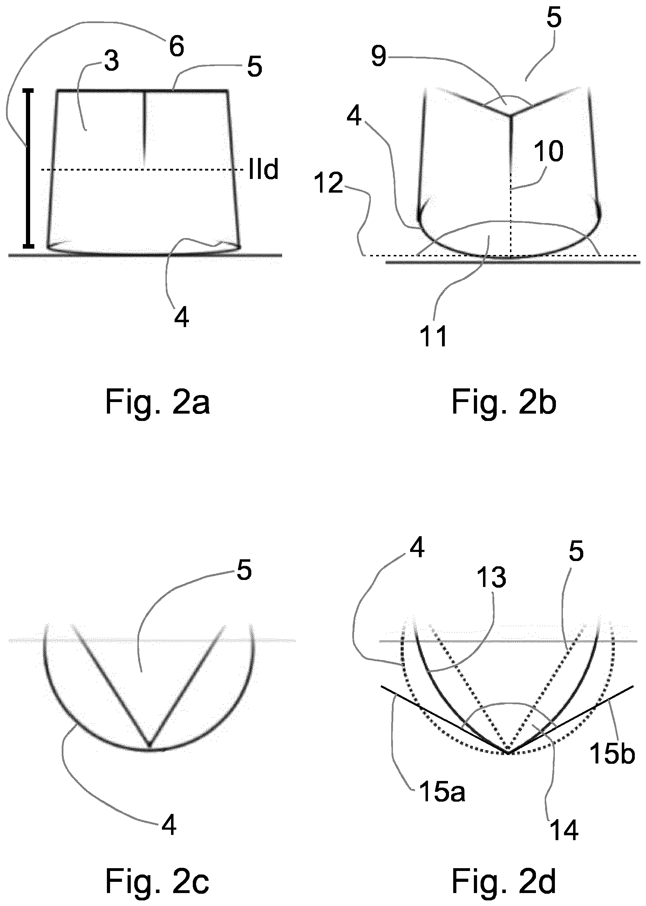

Wie in der Figur 1 bereits in den Grundzügen erkennbar, gehen die Abschlussflächen 5 der Vorsprünge 3 entlang einer jeweiligen Erstreckung der Vorsprungshöhe 6 fließend zu den Grundkonturen 4 der Vorsprünge 3 über. Dies wird anhand der Figuren 2a bis 2d im Detail erläutert. Figuren 2a bis 2d zeigen verschiedene Einzelansichten des in Figur 1 links dargestellten Vorsprungs 3, wobei der Vorsprung 3 im Rahmen der hiesigen Betrachtung für sich genommen und ohne den Hintergrund der Profilrille 2 betrachtet wird. Wie aus der perspektivischen Ansicht gemäß Figur 2b und aus der Draufsicht gemäß Figur 2c ersichtlich, ist die Abschlussfläche 5 dreieckig, während die Grundkontur 4 als Kreisbogen ausgebildet ist; hierbei sind die Übergange der Abschlussfläche 5 und der Grundkontur 4 in die erste Rillenflanke 8a nicht als scharfe Linien dargestellt sondern durch ein Verblassen der Zeichnungslinien angedeutet. Eine Geodäte 10 zwischen einem ersten abschlussflächenseitigen Innenwinkel 9 und der Grundkontur 4 ist in Figur 2b als gestrichelte Linie dargestellt. Am Schnittpunkt der Geodäte 10 mit der Grundkontur 4 ist eine Tangente 12 an die Grundkontur 4 als gestrichelte Linie dargestellt. Der Innenwinkel weitet sich entlang der Geodäte von ungefähr 60° an der Abschlussfläche 5 zu einem an der Tangente 12 bei der Grundkontur 4 definierten Ersatzwinkel 11 von 180° auf; dementsprechend weitet sich der erste abschlussflächenseitige Innenwinkel 9 von der Abschlussfläche 5 zu der Grundkontur 4 hin um 200% auf. Wie aus der Figur 2c ersichtlich, verläuft die Geodäte 10 senkrecht zu der Abschlussfläche 5, die wiederum parallel zu der in den Figuren 2a bis 2d nicht gezeigten Basisfläche 1 des Fahrzeugreifens verläuft. Hierdurch kann die Abschlussfläche 5 trotz der sich nach unten hin aufweitenden - und sich andersherum nach oben hin verengenden - Innenwinkel für einen Kontakt mit einem Fahrbahnuntergrund möglichst groß gehalten werden.

Der Übergang zwischen der Abschlussfläche 5 und der Grundkontur 4 kann fließend erfolgen, wie in Figur 2b angedeutet ist. In Figur 2d ist eine Schnittkontur 13 des Vorsprungs 3 in der in Figur 2a als gestrichelte Linie angedeuteten Ebene IId gezeigt, wobei die Ebene IId parallel zu der Abschlussfläche 5 und parallel zu der Basisfläche 1 des Fahrzeugreifens auf halber Vorsprungshöhe 6 durch den Vorsprung 3 verläuft. Gemäß Figur 2d verläuft die Schnittkontur 13 des Vorsprungs 3 in der Ebene IId zwischen der Kontur 5 der Abschlussfläche und der Grundkontur 4, die in Figur 2d beide zum Vergleich als gestrichelte Linien dargestellt sind. Ein Innenwinkel 14 an einem Eckpunkt der Schnittkontur 13 ergibt sich zwischen zwei Tangenten 15a, 15b, die kurz vor dem Eckpunkt zu zwei Seiten an der Schnittkontur 13 anliegen, wie in Figur 2d anhand gewinkelter Linien angedeutet. Der Innenwinkel 14 in der Schnittkontur 13 liegt in seiner Größe zwischen dem ersten abschlussflächenseitigen Innenwinkel 9 und dem Ersatzwinkel 11 an der Grundkontur.

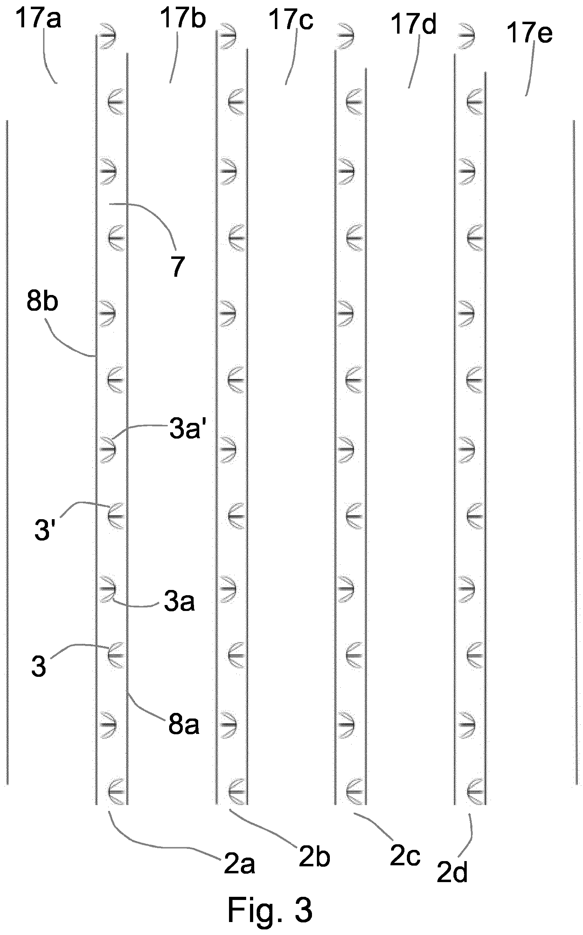

Figur 3 zeigt eine Draufsicht auf ein Profil eines Fahrzeugreifens mit vier Umfangsrillen 2a bis 2d, die in an sich bekannter Weise fünf Profilbänder 17a bis 17e definieren. In jeder der Profilrillen 2a bis 2d sind Vorsprünge ausgebildet, die in ihrer Grundform der in Figur 1 rechts dargestellten Ausführungsform gleichen. Die Anordnung der Vorsprünge in den Profilrillen 2a bis 2d wird am Beispiel der in Figur 3 links dargestellten Profilrille 2a näher erläutert. Wie gemäß der Figur 1 ist ein erster Vorsprung 3 an eine erste Rillenflanke 8a der Profilrille 2a angebunden und von der gegenüberliegenden zweiten Rillenflanke 8b beabstandet. In einem Abstand in Richtung einer Längserstreckung der Profilrille 2a von etwa dem Eineinhalbfachen der maximalen Breite des ersten Vorsprungs 3 ist ein zweiter Vorsprung 3a an die zweite Rillenflanke 8b der Profilrille 2a angebunden und von der ersten Rillenflanke 8a beabstandet. Abgesehen von der in Bezug auf die Rillenflanken 8a, 8b der Profilrille 2a spiegelbildlichen Orientierung des zweiten Vorsprungs 3a sind der erste und der zweite Vorsprung 3, 3a zueinander identisch ausgebildet. In einem weiteren Abstand in Richtung einer Längserstreckung der Profilrille 2a von etwa dem Eineinhalbfachen der maximalen Breite des zweiten Vorsprungs 3a, ist ein weiterer Vorsprung 3' nach Art des ersten Vorsprungs 3 an die erste Rillenflanke 8a der Profilrille 2a angebunden und von der zweiten Rillenflanke 8b beabstandet. In noch einem weiteren, ebensolchen Abstand ist ein Vorsprung 3a' nach Art des zweiten Vorsprungs 3a angeordnet.

Auf die beschriebene Weise zieht sich ein alternierendes Muster von Vorsprüngen 3, 3a, 3', 3a' nach Art der ersten und zweiten Rillenflanken 8a, 8b entlang der Längserstreckung jeder Rille 2a bis 2d. Es können in der beschriebenen Weise Vorsprünge 3, 3a, 3', 3a' entlang der gesamten Umfangserstreckung einer jeweiligen Profilrille 2a bis 2d angeordnet sein, wobei die Abstände jeweils zweier Vorsprünge 3, 3a, 3', 3a'entlang der gesamten Umfangserstreckung konstant sein können. Das alternierende Muster lässt am Rillengrund 7 einen wellenförmigen Freiraum zwischen den Vorsprüngen 3, 3a, 3', 3a' und der jeweils beabstandeten Rillenflanke 8a, 8b entstehen, wodurch ein vorteilhaftes Strömungsverhalten von auszuleitendem Wasser begünstigt werden kann. Zudem wird durch die Anordnung der Vorsprünge 3, 3a, 3', 3a' an beiden Rillenflanken 8a, 8b eine möglichst gleichmäßige Stabilität der Profilrillen 2a bis 2d und der Ränder der angrenzenden Profilbänder 17a bis 17e erzielt. Weiterhin kann durch die abwechselnd zu entgegengesetzten Orientierungen ausgerichteten Flanken der Vorsprünge 3, 3a, 3', 3a' eine möglichst isotrop wirkende Funktionalität beim Steinauswurf erzielt werden.

### Bezugszeichenliste

- 1: Basisfläche
- 2.: Profilrille
- 2a: erste Profilrille
- 2b: zweite Profilrille
- 2c: dritte Profilrille
- 2d: vierte Profilrille
- 3: erster Vorsprung
- 3a: zweiter Vorsprung
- 3': weiterer Vorsprung
- 3a: Vorsprung (nach Art des zweiten Vorsprungs)
- 4.: Grundkontur
- 5: Abschlussfläche
- 6: Vorsprungshöhe
- 7: Rillengrund
- 8a: erste Rillenflanke
- 8b: zweite Rillenflanke
- 9: erster abschlussflächenseitiger Innenwinkel
- 10: Geodäte
- 11: Ersatzwinkel
- 12: Tangente
- 13: Schnittkontur
- 14: Innenwinkel (an einem Eckpunkt der Schnittkontur)
- 15a: Tangente (an einerseits kurz vor Eckpunkt gelegener Position)
- 15b: Tangente (an andererseits kurz vor Eckpunkt gelegener Position)
- 16: Einschnitt
- 17a bis 17e: erstes bis fünftes Profilband
- 19: Rillentiefe

## Patentansprüche

1. Fahrzeugreifen mit einem Profil, umfassend eine Basisfläche (1) und eine gegenüber der Basisfläche (1) um eine Rillentiefe (19) zurückversetzte Profilrille (2) mit einer ersten Rillenflanke (8a), einer zweiten Rillenflanke (8b) und einem sich zwischen den Rillenflanken (8a, 8b) erstreckenden Rillengrund (7), wobei sich von einer auf dem Rillengrund (7) gelegenen Grundkontur (4) ausgehend wenigstens ein erster Vorsprung (3) um eine Vorsprungshöhe (6) bis zu einer Abschlussfläche (5) erstreckt, wobei die Vorsprungshöhe (6) kleiner ist als die Rillentiefe (19), wobei der Vorsprung (3) an die erste Rillenflanke (8a) angebunden ist und von der zweiten Rillenflanke (8b) beabstandet ist und wobei die Abschlussfläche (5) im Wesentlichen parallel zu der Basisfläche (1) verläuft, wobei die Abschlussfläche (5) einen ersten abschlussflächenseitigen Innenwinkel (9) umfasst,
**dadurch gekennzeichnet,**
**dass** sich der erste abschlussflächenseitige Innenwinkel (9) entlang einer Geodäte (10) zu der Grundkontur (4) hin aufweitet, wobei die Geodäte (10) zwischen dem ersten abschlussflächenseitigen Innenwinkel (9) und der Grundkontur (4) des Vorsprungs (3) die kürzeste auf einer Oberfläche des Vorsprungs (3) verlaufende Verbindung zwischen dem Berührungspunkt zweier Seiten der Abschlussfläche (5) in dem ersten abschlussflächenseitigen Innenwinkel (9) und der Grundkontur (4) ist.

2. Fahrzeugreifen gemäß Anspruch 1, **dadurch gekennzeichnet, dass** ein Flächeninhalt der Abschlussfläche (5) wenigstens 30%, vorzugsweise wenigstens 50%, weiter vorzugsweise wenigstens 70% eines von der Grundkontur (4) eingeschlossenen Flächeninhalts beträgt.

3. Fahrzeugreifen gemäß einem der Ansprüche 1 oder 2, **dadurch gekennzeichnet, dass** die Vorsprungshöhe (6) zwischen 5% und 50%, vorzugsweise zwischen 10% und 30% der Rillentiefe (19) beträgt.

4. Fahrzeugreifen gemäß einem der Ansprüche 1 bis 3, **dadurch gekennzeichnet, dass** die Grundkontur (4) sich über 20% bis 80%, vorzugsweise über 40% bis 70% einer Breite des Rillengrundes (7) erstreckt.

5. Fahrzeugreifen gemäß einem der Ansprüche 1 bis 4, **dadurch gekennzeichnet, dass** der erste abschlussflächenseitige Innenwinkel (9) kleiner oder gleich 120° ist.

6. Fahrzeugreifen gemäß einem der Ansprüche 1 bis 5, **dadurch gekennzeichnet, dass** die Abschlussfläche (5) mehrere abschlussflächenseitige Innenwinkel (9) umfasst, wobei sich jeder der abschlussflächenseitigen Innenwinkel (9) entlang jeweils einer Geodäte (10) zu jeweils einem Punkt auf der Grundkontur (4) hin aufweitet.

7. Fahrzeugreifen gemäß einem der Ansprüche 1 bis 6, **dadurch gekennzeichnet, dass** sich der erste abschlussflächenseitige Innenwinkel (9) entlang der Geodäte (10) zu der Grundkontur hin um wenigstens 30%, vorzugsweise um wenigstens 50% aufweitet.

8. Fahrzeugreifen gemäß einem der Ansprüche 1 bis 7, **dadurch gekennzeichnet, dass** die Grundkontur (4) abseits der ersten Rillenflanke (8a) eine gerundete Form ohne Innenwinkel aufweist, wobei die Grundkontur (4) abseits der ersten Rillenflanke (8a) vorzugsweise durch einen ovalen Bogen, insbesondere durch einen elliptischen Bogen, insbesondere durch einen Kreisbogen beschrieben wird.

9. Fahrzeugreifen gemäß einem der Ansprüche 1 bis 8, **dadurch gekennzeichnet, dass** die Geodäte (10) zwischen dem ersten abschlussflächenseitigen Innenwinkel (9) und der Grundkontur (4) senkrecht zu der Basisfläche (1) oder angeschrägt um einen Winkel von maximal 15° verläuft.

10. Fahrzeugreifen gemäß einem der Ansprüche 1 bis 9, **dadurch gekennzeichnet, dass** der erste Vorsprung (3) bei der Anbindung zu der ersten Rillenflanke (8a) entlang der gesamten Erstreckung der Vorsprungshöhe (6) seine jeweils größte Breite aufweist.

11. Fahrzeugreifen gemäß einem der Ansprüche 1 bis 10, **dadurch gekennzeichnet, dass** Winkel zwischen der ersten Rillenflanke (8a) und dem ersten Vorsprung (3) wenigstens 90° betragen und vorzugsweise von der Grundkontur (4) zu der Abschlussfläche (5) hin größer werden.

12. Fahrzeugreifen gemäß einem der Ansprüche 1 bis 11, **dadurch gekennzeichnet, dass** die Abschlussfläche (5) von wenigstens einem Einschnitt (16) in den ersten Vorsprung (3) unterbrochen wird, wobei der Einschnitt (16) vorzugsweise eine Tiefe zwischen 0,25 mm und 2,5 mm, weiter vorzugsweise zwischen 0,5 mm und 2 mm aufweist.

13. Fahrzeugreifen gemäß einem der Ansprüche 1 bis 12, **dadurch gekennzeichnet, dass** der Fahrzeugreifen ein Negativvolumen von höchstens 25% aufweist.

14. Fahrzeugreifen gemäß einem der Ansprüche 1 bis 13, **dadurch gekennzeichnet, dass** der Fahrzeugreifen mehrere Vorsprünge (3, 3', 3a) umfasst, wobei wenigstens ein zweiter Vorsprung (3a) den Bedingungen an den ersten Vorsprung (3) gemäß einem oder mehreren der vorstehenden Ansprüche im Wesentlichen genügt, mit der einzigen Ausnahme, dass der weitere Vorsprung (3') an die zweite Rillenflanke (8b) angebunden ist und von der ersten Rillenflanke (8a) beabstandet ist und/oder wobei wenigstens ein weiterer Vorsprung (3') den Bedingungen an den ersten Vorsprung (3) gemäß einem oder mehreren der vorstehenden Ansprüche genügt.

15. Fahrzeugreifen gemäß Anspruch 14, **dadurch gekennzeichnet, dass** wenigstens drei entlang einer Längserstreckung der Profilrille zueinander benachbart angeordnete Vorsprünge (3, 3', 3a) abwechselnd nach der Art des ersten Vorsprungs (3) und des zweiten Vorsprungs (3a) gegenüber der ersten Rillenflanke (8a) und der zweiten Rillenflanke (8b) angeordnet sind.

## Claims

1. Vehicle tyre with a profile, comprising a base surface (1) and a profile channel (2) which is set back by a channel depth (19) in relation to the base surface (1) and has a first channel flank (8a), has a second channel flank (8b) and has a channel base (7) which extends between the channel flanks (8a, 8b), wherein at least a first projection (3) extends by a projection height (6) from a base contour (4), situated on the channel base (7), as far as a terminating surface (5), wherein the projection height (6) is smaller than the channel depth (19), wherein the projection (3) is attached to the first channel flank (8a) and is spaced apart from the second channel flank (8b), and wherein the terminating surface (5) extends substantially parallel to the base surface (1), wherein the terminating surface (5) comprises a first terminating-surface-side interior angle (9), **characterized**
**in that** the first terminating-surface-side interior angle (9) widens along a geodesic (10) to the base contour (4), wherein the geodesic (10) between the first terminating-surface-side interior angle (9) and the base contour (4) of the projection (3) is that connection between the point of contact of two sides of the terminating surface (5) in the first terminating-surface-side interior angle (9) and the base contour (4) which lies on a surface of the projection (3) and which has the shortest length.

2. Vehicle tyre according to Claim 1, **characterized in that** an area of the terminating surface (5) is at least 30%, preferably at least 50%, more preferably at least 70%, of an area of a surface enclosed by the base contour (4).

3. Vehicle tyre according to either of Claims 1 and 2, **characterized in that** the projection height (6) is between 5% and 50%, preferably between 10% and 30%, of the channel depth (19).

4. Vehicle tyre according to one of Claims 1 to 3, **characterized in that** the base contour (4) extends over 20% to 80%, preferably over 40% to 70%, of a width of the channel base (7).

5. Vehicle tyre according to one of Claims 1 to 4, **characterized in that** the first terminating-surface-side interior angle (9) is less than or equal to 120°.

6. Vehicle tyre according to one of Claims 1 to 5, **characterized in that** the terminating surface (5) comprises multiple terminating-surface-side interior angles (9), wherein each of the terminating-surface-side interior angles (9) widens along a respective geodesic (10) to a respective point on the base contour (4).

7. Vehicle tyre according to one of Claims 1 to 6, **characterized in that** the first terminating-surface-side interior angle (9) widens by at least 30%, preferably by at least 50%, along the geodesic (10) to the base contour.

8. Vehicle tyre according to one of Claims 1 to 7, **characterized in that** the base contour (4) has a rounded shape without an interior angle away from the first channel flank (8a), wherein the base contour (4) is preferably described by an oval arc, in particular by an elliptical arc, in particular by a circular arc, away from the first channel flank (8a).

9. Vehicle tyre according to one of Claims 1 to 8, **characterized in that** the geodesic (10) between the first terminating-surface-side interior angle (9) and the base contour (4) is perpendicular to the base surface (1) or has an inclination with an angle of at most 15°.

10. Vehicle tyre according to one of Claims 1 to 9, **characterized in that**, at the attachment to the first channel flank (8a), the first projection (3) has along the entire extent of the projection height (6) its respectively greatest width.

11. Vehicle tyre according to one of Claims 1 to 10, **characterized in that** angles between the first channel flank (8a) and the first projection (3) are at least 90° and preferably increase in size from the base contour (4) to the terminating surface (5).

12. Vehicle tyre according to one of Claims 1 to 11, **characterized in that** the terminating surface (5) is interrupted by at least one sipe (16) in the first projection (3), wherein the sipe (16) preferably has a depth of between 0.25 mm and 2.5 mm, more preferably of between 0.5 mm and 2 mm.

13. Vehicle tyre according to one of Claims 1 to 12, **characterized in that** the vehicle tyre has a negative volume of at most 25%.

14. Vehicle tyre according to one of Claims 1 to 13, **characterized in that** the vehicle tyre comprises multiple projections (3, 3', 3a), wherein at least a second projection (3a) substantially satisfies the conditions on the first projection (3) according to one or more of the preceding claims with the sole exception that the further projection (3') is attached to the second channel flank (8b) and spaced apart from the first channel flank (8a), and/or wherein at least one further projection (3') satisfies the conditions on the first projection (3) according to one or more of the preceding claims.

15. Vehicle tyre according to Claim 14, **characterized in that** at least three projections (3, 3', 3a) arranged adjacent to one another along a longitudinal extent of the profile channel are arranged alternately in the manner of the first projection (3) and the second projection (3a) in relation to the first channel flank (8a) and to the second channel flank (8b).

## Revendications

1. Pneu de véhicule avec un profil, comprenant une surface de base (1) et une rainure de profil (2) décalée en arrière par rapport à la surface de base (1) d'une profondeur de rainure (19) avec un premier flanc de rainure (8a), un deuxième flanc de rainure (8b) et un fond de rainure (7) s'étendant entre les flancs de rainure (8a, 8b), au moins une première saillie (3) s'étendant d'une hauteur de saillie (6) jusqu'à une surface de terminaison (5) en partant d'un contour de base (4) situé sur le fond de rainure (7), la hauteur de la saillie (6) étant inférieure à la profondeur de rainure (19), la saillie (3) étant reliée au premier flanc de rainure (8a) et étant espacée du deuxième flanc de rainure (8b), et la surface de terminaison (5) s'étendant essentiellement parallèlement à la surface de base (1), la surface de terminaison (5) comprenant un premier angle intérieur (9) côté surface de terminaison,
**caractérisé en ce que**
le premier angle intérieur (9) côté surface de terminaison s'élargit le long d'une géodésique (10) vers le contour de base (4), la géodésique (10) entre le premier angle intérieur (9) côté surface de terminaison et le contour de base (4) de la saillie (3) étant la liaison la plus courte s'étendant sur une surface de la saillie (3) entre le point de contact de deux côtés de la surface de terminaison (5) dans le premier angle intérieur (9) côté surface de terminaison et le contour de base (4).

2. Pneu de véhicule selon la revendication 1, **caractérisé en ce qu'**une superficie de la surface de terminaison (5) est d'au moins 30 %, de préférence d'au moins 50 %, de préférence encore d'au moins 70 % d'une superficie incluse par le contour de base (4).

3. Pneu de véhicule selon l'une quelconque des revendications 1 ou 2, **caractérisé en ce que** la hauteur de saillie (6) est comprise entre 5 % et 50 %, de préférence entre 10 % et 30 % de la profondeur de rainure (19).

4. Pneu de véhicule selon l'une quelconque des revendications 1 à 3, **caractérisé en ce que** le contour de base (4) s'étend sur 20 % à 80 %, de préférence sur 40 % à 70 % d'une largeur du fond de rainure (7).

5. Pneu de véhicule selon l'une quelconque des revendications 1 à 4, **caractérisé en ce que** le premier angle intérieur (9) côté surface de terminaison est inférieur ou égal à 120°.

6. Pneu de véhicule selon l'une quelconque des revendications 1 à 5, **caractérisé en ce que** la surface de terminaison (5) comprend une pluralité d'angles intérieurs (9) côté surface de terminaison, chacun des angles intérieurs (9) côté surface de terminaison s'élargissant le long d'une géodésique respective (10) vers un point respectif sur le contour de base (4).

7. Pneu de véhicule selon l'une quelconque des revendications 1 à 6, **caractérisé en ce que** le premier angle intérieur (9) côté surface de terminaison s'élargit le long de la géodésique (10) vers le contour de base d'au moins 30 %, de préférence d'au moins 50 %.

8. Pneu de véhicule selon l'une quelconque des revendications 1 à 7, **caractérisé en ce que** le contour de base (4) présente, à l'écart du premier flanc de rainure (8a), une forme arrondie sans angle intérieur, le contour de base (4) étant décrit, à l'écart du premier flanc de rainure (8a), de préférence par un arc ovale, notamment par un arc elliptique, notamment par un arc de cercle.

9. Pneu de véhicule selon l'une quelconque des revendications 1 à 8, **caractérisé en ce que** la géodésique (10) entre le premier angle intérieur (9) côté surface de terminaison et le contour de base (4) est perpendiculaire à la surface de base (1) ou inclinée d'un angle de 15° maximum.

10. Pneu de véhicule selon l'une quelconque des revendications 1 à 9, **caractérisé en ce que** la première saillie (3) présente sa plus grande largeur respective lors de la liaison avec le premier flanc de rainure (8a) le long de toute l'étendue de la hauteur de saillie (6).

11. Pneu de véhicule selon l'une quelconque des revendications 1 à 10, **caractérisé en ce que** les angles entre le premier flanc de rainure (8a) et la première saillie (3) sont d'au moins 90° et, de préférence, augmentent depuis le contour de base (4) vers la surface de terminaison (5).

12. Pneu de véhicule selon l'une quelconque des revendications 1 à 11, **caractérisé en ce que** la surface de terminaison (5) est interrompue par au moins une incision (16) dans la première saillie (3), l'incision (16) présentant de préférence une profondeur comprise entre 0,25 mm et 2,5 mm, de préférence encore entre 0,5 mm et 2 mm.

13. Pneu de véhicule selon l'une quelconque des revendications 1 à 12, **caractérisé en ce que** le pneu de véhicule présente un volume négatif d'au plus 25 %.

14. Pneu de véhicule selon l'une quelconque des revendications 1 à 13, **caractérisé en ce que** le pneu de véhicule comprend plusieurs saillies (3, 3', 3a), au moins une deuxième saillie (3a) satisfaisant essentiellement aux conditions de la première saillie (3) selon une ou plusieurs des revendications précédentes, à la seule exception que l'autre saillie (3') est reliée au deuxième flanc de rainure (8b) et est espacée du premier flanc de rainure (8a) et/ou au moins une autre saillie (3') satisfaisant aux conditions de la première saillie (3) selon une ou plusieurs des revendications précédentes.

15. Pneu de véhicule selon la revendication 14, **caractérisé en ce qu'**au moins trois saillies (3, 3', 3a) agencées de manière adjacente les unes aux autres le long d'une étendue longitudinale de la rainure de profil sont agencées alternativement à la manière de la première saillie (3) et de la deuxième saillie (3a) en face du premier flanc de rainure (8a) et du deuxième flanc de rainure (8b).
